# EUROPEAN PATENT APPLICATION

(11) **EP 2 213 909 A2**
(43) Date of publication of application: **04.08.2010**
(21) Application number: 10151374.5
(22) Date of filing: 22.01.2010
(51) Int. Cl.: F16H 61/00

(54) **Hydraulic control module**

(30) Priority: 29.01.2009 JP 2009018783
(71) Applicant: Hitachi Automotive Systems, Ltd., Hitachinaka-shi Ibaraki 312-8502 (JP); Nidec Tosok Corporation, Zama-shi, Kanagawa 2288570 (JP)
(72) Inventor: Shigyo, Toshikazu, Ibaraki 312-8503 (JP); Odakura, Yasunori, Ibaraki 312-8503 (JP); Tanabe, Itaru, Ibaraki 312-8503 (JP); Masuda, Mitsuhiro, Ibaraki 312-8503 (JP); Kanno, Kiyotaka, Ibaraki 312-8503 (JP); Yamada, Masaaki, Kanagawa 228-8570 (JP); Sumiyoshi, Motohiro, Kanagawa 228-8570 (JP); Takahashi, Kenro, Kanagawa 228-8570 (JP); Sakagami, Hitoshi, Kanagawa 228-8570 (JP)
(74) Representative: MERH-IP Matias Erny Reichl Hoffmann

(57) **Abstract**

Disclosed is a hydraulic control module that can be downsized. The hydraulic control module includes an upper control valve (3), a lower control valve (4), and a wiring plate (1). The upper and lower control valves (3, 4) each include an oil path having a groove portion. A sandwich structure is employed so that the wiring plate (1) is sandwiched between the upper and lower control valves (3, 4). The wiring plate (1) has a groove portion or a through-hole (12A1, 12A3) that is in communication with the at least one of the groove portion of the upper control valve (3) and the groove portion of the lower control valve (4).

## Description

### BACKGROUND OF THE INVENTION

### 1. Field of the Invention

The present invention relates to a hydraulic control module that controls a vehicle-mounted transmission, and more particularly to a hydraulic control module that is preferably installed in a transmission case.

### 2. Description of the Related Art

In a conventionally known hydraulic control module (refer, for instance, to JP-2004-150466-A and JP-2004-28185-A), a control valve is separate from an electronic control unit or a wiring plate including the electronic control unit so that the wiring plate or electronic control unit is installed above or below the control valve.

### SUMMARY OF THE INVENTION

However, the hydraulic control modules described in JP-2004-150466-A and JP-2004-28185-A are large in size. More specifically, a typical conventional hydraulic control module is configured so that the wiring plate is mounted above the control valve. It means that the wiring plate and its mount are restricted in terms of layout by the shape of the top of the control valve and the shape of a casing around the hydraulic control module. This makes it difficult to manufacture a small-size hydraulic control module.

Further, the wiring plate is configured so that a base member engages with a cover member to protect a wiring material and a joint. Therefore, the wiring plate needs to have an engagement structure and vibration-proof structure for the cover member and base member. As a result, the engagement structure for the cover member and base member becomes complex and increases the overall size of the wiring plate.

An object of the present invention is to provide a hydraulic control module that can be small in size.
(1) In accomplishing the above object, according to one aspect of the present invention, there is provided a hydraulic control module including a control valve, an electronic control unit, and a wiring plate. The control valve includes an oil path having a groove portion for providing hydraulic control over a transmission. The electronic control unit controls a control target part that is to be controlled by the control valve. The wiring plate includes a wiring member that electrically connects the electronic control unit to the control target part. The control valve includes a first control valve and a second control valve, the first control valve and the second control valve each including an oil path having a groove portion. The wiring plate is sandwiched between the first control valve and the second control valve, and includes an oil path that is in communication with the at least one of the groove portion of the first control valve and the groove portion of the second control valve.
   As the employed configuration is as described above, the hydraulic control module can be downsized.
(2) Preferably, there is provided the hydraulic control module as described in (1) above, further including a separate plate that is positioned between the first control valve and the wiring plate and between the second control valve and the wiring plate to make the respective contact surfaces of the separate plate oil-tight.
(3) Preferably, there is provided the hydraulic control module as described in (2) above, wherein the separate plate is a seal which is integral with the surfaces of the wiring plate that are in contact with the first or second control valve.
(4) Preferably, there is provided the hydraulic control module as described in (1) above, wherein the wiring plate includes a through-hole that serves as an oil path, wherein the control target part is a solenoid whose movable part is inserted into the through-hole, and wherein the solenoid is mounted on either the first control valve or the second control valve and electrically connected to the electronic control unit.
(5) Preferably, there is provided the hydraulic control module as described in (1) above, further including a filtering member that is embedded in the wiring plate to prevent foreign matter from flowing into an oil path communicating with the control target part.
(6) Preferably, there is provided the hydraulic control module as described in (1) above, wherein the wiring plate is integral with a holding part that secures a solenoid as the control target part.
(7) Preferably, there is provided the hydraulic control module as described in (1) above, further including a sensor or a switch as the control target part that is embedded in the wiring plate and connected to the electronic control unit.
(8) Preferably, there is provided the hydraulic control module as described in (1) above, further including a convex heat sink that is integral with either the first control valve or the second control valve and in contact with the electronic control unit, which is exposed from a surface of the wiring plate.
(9) In accomplishing the above object, according to another aspect of the present invention, there is provided a hydraulic control module including a control valve and a wiring plate. The control valve includes an oil path having a groove portion for providing hydraulic control over a transmission. The wiring plate includes a wiring member that is to be electrically connected to a control target part to be controlled by the control valve. The control valve includes a first control valve and a second control valve, the first control valve and the second control valve each including an oil path having a groove portion. The wiring plate is sandwiched between the first control valve and the second control valve, and includes an oil path that is in communication with the at least one of the groove portion of the first control valve and the groove portion of the second control valve.

As the employed configuration is as described above, the hydraulic control module can be downsized.

The present invention makes it possible to provide a small-size hydraulic control module.

### BRIEF DESCRIPTION OF THE DRAWINGS

FIG. 1 is an essential part cross-sectional view illustrating the configuration of a hydraulic control module according to a first embodiment of the present invention.
FIG. 2 is a circuit diagram illustrating a hydraulic circuit including a control valve for use with the hydraulic control module according to the first embodiment of the present invention.
FIG. 3 is an essential part cross-sectional view illustrating the configuration of the hydraulic control module according to a second embodiment of the present invention.
FIG. 4 is an essential part cross-sectional view illustrating the configuration of the hydraulic control module according to a third embodiment of the present invention.
FIG. 5 is an essential part cross-sectional view illustrating the configuration of the hydraulic control module according to a fourth embodiment of the present invention.
FIG. 6 is an essential part cross-sectional view illustrating the configuration of the hydraulic control module according to a fifth embodiment of the present invention.

### DESCRIPTION OF THE PREFERRED EMBODIMENTS

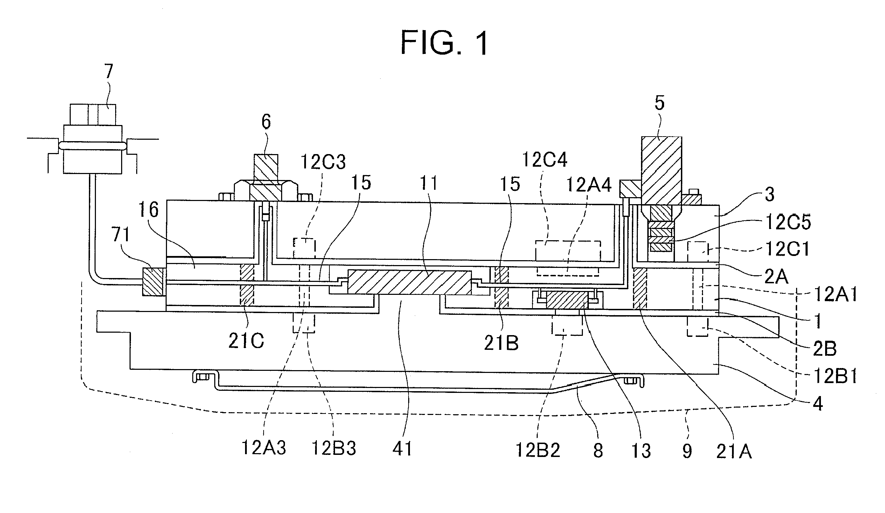

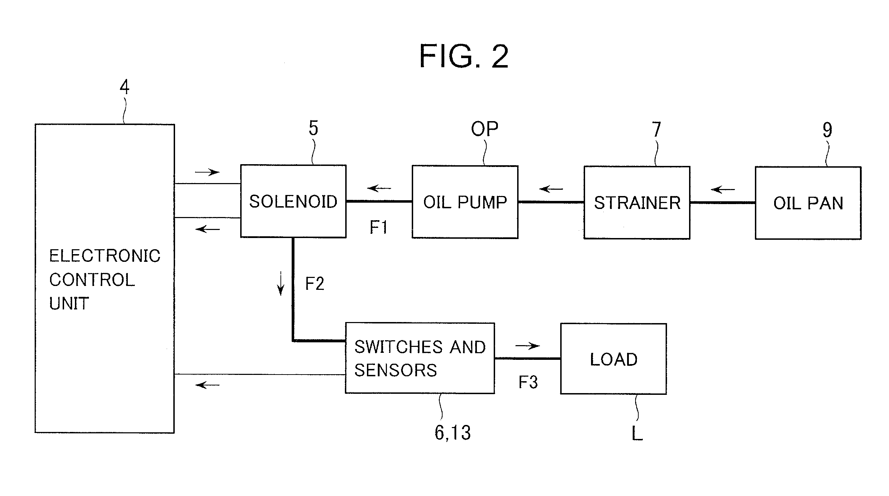

The configuration of a hydraulic control module according to a first embodiment of the present invention will now be described with reference to FIGS. 1 and 2.

FIG. 1 is an essential part cross-sectional view illustrating the configuration of the hydraulic control module according to the first embodiment of the present invention. FIG. 2 is a circuit diagram illustrating a hydraulic circuit including a control valve for use with the hydraulic control module according to the first embodiment of the present invention.

First of all, the overall configuration of the hydraulic control module according to the present embodiment will be described with reference to FIG. 1.

The hydraulic control module according to the present embodiment mainly includes a wiring plate 1, an upper control valve 3, a lower control valve 4, and separate plates 2A, 2B. These four different members are stacked and secured together with bolts and nuts. The hydraulic control module according to the present embodiment is installed in a transmission case. The hydraulic control module is placed in an oil pan 9 for an automatic transmission. Oil in the oil pan 9 is used to provide hydraulic control.

The wiring plate 1 includes a plurality of wiring members 15, electrical parts such as sensors 6 and switches 13, an electronic control unit 11, and a connector 71. Through the use of resin 16, these parts are insert-molded to form the wiring plate 1. The resin 16 is insulating thermoplastic resin. The resin 16 provides insulation between the plurality of wiring members 15 and between a plurality of terminals of the electronic control unit 11.

The wiring members 15 are composed of a busbar that is made of copper having high thermal conductivity or a copper-based alloy material. Although the wiring members 15 may be composed, for instance, of a wiring harness, a cable, or a wiring substrate, a busbar is preferably used because it facilitates insert molding with thermoplastic resin.

The control target electrical parts such as sensors 6, switches 13, and a solenoid 5, the electronic control unit 11, and the connector 71 are electrically connected to the wiring members 15 by means of welding. The connection may be established not only by welding but also by connector connection, crimping connection, brazing, or the like.

For example, the sensors 6, switches 13, and solenoid 5 are electrical parts to be controlled. The sensors 6 include, for instance, a rotation sensor for measuring rotating bodies such as an input shaft and an output shaft in the transmission, an oil temperature sensor for measuring the temperature of fluid, a hydraulic sensor for measuring the pressure of fluid, and an inclination angle sensor for measuring an inclination angle. The switches 13 include, for instance, a hydraulic switch for measuring the pressure of fluid and a range switch for measuring a range signal of the transmission. The solenoid 5 opens and closes a valve to control the flow rate of fluid for transmission control purposes.

The connector 71 is connected to an external connector 7 through a connection member. The external connector 7 connects, for instance, to the outside. A busbar is used as the connection member. Alternatively, however, a wiring harness, a wiring substrate, or the like may be used as the connection member. Another alternative is to obviate the need for the connection member and connect the external connector 7 directly to the wiring plate 1 for integral molding. If the sensors 6, switches 13, and other electrical parts cannot be optimally disposed, the connector counted as an electrical part may be electrically connected to the external connector 7 through the connection member.

The external connector 7 is electrically connected to a vehicle through an opening in the transmission case. Sealing between the external connector 7 and the transmission case is achieved in such a manner that an O-ring or the like installed over the external connector 7 provides air-tightness and oil-tightness.

A plurality of through-holes 12A1, 12A3 are formed in the resin 16. The through-holes 12A1, 12A3 are used as oil paths. Meanwhile, a plurality of grooves 12C1, 12C3 are formed on a surface of the upper control valve 3 that faces the wiring plate 1. These grooves 12C1, 12C3 are positioned in alignment with the through-holes 12A1, 12A3 in the wiring plate 1. Further, a plurality of grooves 12B1, 12B3 are formed on a surface of the lower control valve 4 that faces the wiring plate 1. These grooves 12B1, 12B3 are positioned in alignment with the through-holes 12A1, 12A3 in the wiring plate 1. All these grooves 12C1, 12C3, 12B1, 12B3 are also used as oil paths.

A groove 12A4 is formed on the surface of the resin 16. Further, a groove 12C4 is formed in the upper control valve 3. This groove 12C4 is positioned in alignment with the groove 12A4. The groove 12A4 is in communication with the groove 12C4 to form an oil path.

The upper control valve 3 and lower control valve 4 are aluminum die cast products, and the grooves 12C1, 12C3, 12B1, 12B3 are integrally formed on the upper and lower control valves 3, 4 during die cast molding. Holes are also formed in the separate plates 2A, 2B. These holes are positioned in alignment with the through-holes 12A1, 12A3 in the wiring plate 1. The separate plates 2A, 2B are thin plates made of iron or other metal. The holes in the separate plates 2A, 2B are formed with a punching press or the like. It should be noted that the upper control valve 3 and lower control valve 4 may alternatively be made of another metallic material or resin.

The term "oil path" refers to a groove that allows transmission fluid to flow. The surfaces of the resin 16 that are in contact with the separate plates 2A, 2B are flat enough to be oil-tight. The separate plates 2A, 2B function to provide oil-tightness so that fluid does not leak out of the oil paths in the wiring plate 1, upper control valve 3, and lower control valve 4. In short, parts in contact with the separate plates 2A, 2B are made oil-tight by the contact surfaces.

The separate plates 2A, 2B may be made of a metallic or elastic material as far as they provide vertical oil-tightness. It is preferred that each of the separate plates 2A, 2B be composed of a single plate. It does not matter whether the separate plates are thin or thick. However, the separate plates should be thick enough to provide a certain degree of strength and prevent themselves from being deformed when the parts are sandwiched between them.

A plurality of collars 21A, 21B, and 21C are embedded in the wiring plate 1. The collars 21A, 21B, and 21C are made of metal and shaped like a pipe. The wiring plate 1 is sandwiched between the upper control valve 3 and lower control valve 4. Through-holes are formed in the upper control valve 3 and lower control valve 4. These through-holes are positioned in alignment with the collars 21A, 21B, and 21C in the wiring plate 1. The upper control valve 3 and lower control valve 4 are aluminum die cast products, and the through-holes are integrally formed during die cast molding. Bolts and other fasteners are inserted into the through-holes in the upper control valve 3 and lower control valve 4 and into the openings in the collars 21A, 21B, and 21C in the wiring plate 1 so as to secure the wiring plate 1 between the upper control valve 3 and lower control valve 4. In such an instance, the separate plates 2A, 2B are respectively sandwiched between the wiring plate 1 and the upper control valve 3 and between the wiring plate 1 and the lower control valve 4. Holes are formed in the separate plates 2A, 2B. These holes are positioned in alignment with the openings in the collars 21A, 21B, and 21C.

A through-hole 12C5 is formed in the upper control valve 3. The solenoid 5 is screwed down or otherwise fastened to a solenoid mounted on the upper control valve 3. A movable part of the solenoid 5 is inserted into the through-hole 12C5. The solenoid 5 is used to open and close an oil path. The through-hole 12C5 functions as an oil path for supplying and discharging control fluid. The through-hole 12C5 is connected to an oil path that is extended rearward from the front of the figure. When the movable part operates, it opens or closes the oil path. The solenoid 5 is electrically connected to the electronic control unit 11 through a connection on a connecting member 15 of the wiring plate 1.

It should be noted that the solenoid 5 may alternatively be mounted on the lower control valve 4. In such an instance, its electrical connection is established through a connector. As described above, the solenoid 5 may be mounted on either the upper control valve 3 or the lower control valve 4. When installed, the solenoid 5 may be oriented in a longitudinal direction or in a transverse direction. In an example shown in the figure, the solenoid 5 is mounted on the upper control valve 3 and oriented in the longitudinal direction.

The sensor portion of a hydraulic or other switch 13 faces a groove 12B2, which is one of a plurality of grooves in the lower control valve 4. This makes it possible to detect, for instance, the hydraulic pressure of fluid flowing in an oil path formed by the groove 12B2.

A sensor 6, which is a control target part mounted on the upper control valve 3, is electrically connected to the electronic control unit 11 through a connection on a connecting member 15 of the wiring plate 1.

A hydraulic circuit including a control valve for use with the hydraulic control module according to the present embodiment will now be described with reference to FIG. 2. Like elements in FIGS. 1 and 2 are designated by the same reference numerals. In FIG. 2, thick solid lines represent oil paths, whereas thin solid lines represent signal lines.

An oil pump OP draws fluid from the oil pan 9 through a strainer 8. The fluid whose pressure is raised by the oil pump OP is then supplied to the solenoid 5 through an oil path F1 of the control valve. The solenoid 5 opens and closes in accordance with a control signal from the electronic control unit 11 to control the hydraulic pressure. The hydraulic pressure controlled by the solenoid 5 is then supplied to a switch 31 (hydraulic switch) and a sensor 32 (hydraulic sensor) through an oil path F2 of the control valve. The electronic control unit 11 acquires a hydraulic pressure detected, for instance, by the switch 31 or sensor 32. The electronic control unit 11 controls the solenoid 5 so that the detected hydraulic pressure agrees with a predetermined hydraulic pressure. The fluid whose pressure now agrees with the predetermined pressure due to control is then supplied to an actuator or other load L through an oil path F3 of the control valve for the purpose of operating the load L.

Here, for example, the oil paths F1, F2 correspond to oil paths formed by the through-hole 12C5 shown in FIG. 1, and the oil paths F2, F3 correspond to oil paths formed by the groove 12B2 shown in FIG. 1. The grooves 12B1, 12B3, 12C1, 12C3 shown in FIG. 1 also form predetermined oil paths, respectively.

A dent is formed in a part of the wiring plate 1. The electronic control unit 11 embedded in the wiring plate 1 is partly exposed from the resin. The lower control valve 4 includes a convex heat sink 41. The flat surface of a projection tip of the heat sink 41 is in close contact with the electronic control unit 11.

Oil contained in the oil pan 9 is cooled by means of external cooling. The temperature of the cooled oil is within a range, for instance, from 75°C to 80°C. Meanwhile, the upper limit temperature of a semiconductor device used in the electronic control unit 11 is, for example, 120°C. As described above, heat generated by the electronic control unit 11 can be dissipated as far as the electronic control unit 11 is in close contact with the heat sink 41. It should be noted that the heat sink 41 may alternatively be mounted on the upper control valve 3.

As described earlier, the electronic control unit 11 includes connection terminals electrically connected to the wiring members 15 and a substrate on which electronic parts are mounted to form an electronic circuit. The electronic control unit 11 is encapsulated with resin. The present embodiment provides a sealing function because the electronic control unit 11 is embedded in the wiring plate 1 and sandwiched between the separate plates 2A, 2B, which are positioned between the control valves. Therefore, the electronic control unit 11 need not always have a completely encapsulated structure.

The wiring members 15 to be embedded in the wiring plate 1 may have an alternative structure that permits the wiring members 15 to be built into the wiring plate 1. The wiring members 15 need not always be insert-molded.

The upper control valve 3 and lower control valve 4 are disposed vertically. Alternatively, however, they may be disposed horizontally so that the arrangement shown in FIG. 1 is rotated 90 degrees. More specifically, the present embodiment is characterized in that the wiring plate is sandwiched between two control valves.

As described above, the present embodiment is configured so that the wiring plate is sandwiched between the separated control valves. This makes it possible to set the wiring plate without being restricted by the external shape of a control valve or the shape of a casing around the hydraulic control module. As a result, the hydraulic control module can be downsized.

Further, the employed structure is such that the wiring plate for electrically connecting the electronic control unit to a control target part is sandwiched between the separated control valves. Therefore, the employed structure does not permit electrically conductive foreign matter to enter, for instance, the electronic control unit and control target parts in the wiring plate. If a base member and a cover member were previously positioned above and below the wiring plate to provide a hermetically sealed structure, the necessity of such members can be obviated. In addition, as the wiring plate is sandwiched between the control valves, the employed structure provides increased vibration resistance.

Furthermore, the control valves are provided with a convex heat sink, which is brought into close contact with the electronic control unit. In addition, a sandwich structure is employed so that the heat generated from the electronic control unit dissipates to the heat sink. This ensures that the heat generated from the electronic control unit dissipates to the heat sink with high efficiency.

In the hydraulic control module, the above features serve to simplify the structure for protecting a circuit board in the electronic control unit, simplify the structure for preventing the entry of electrically conductive foreign matter, simplify the vibration-resistant structure, improve the heat dissipation capability of the electronic control unit, and simplify the heat dissipation structure of the electronic control unit. As a result, the hydraulic control module can be downsized.

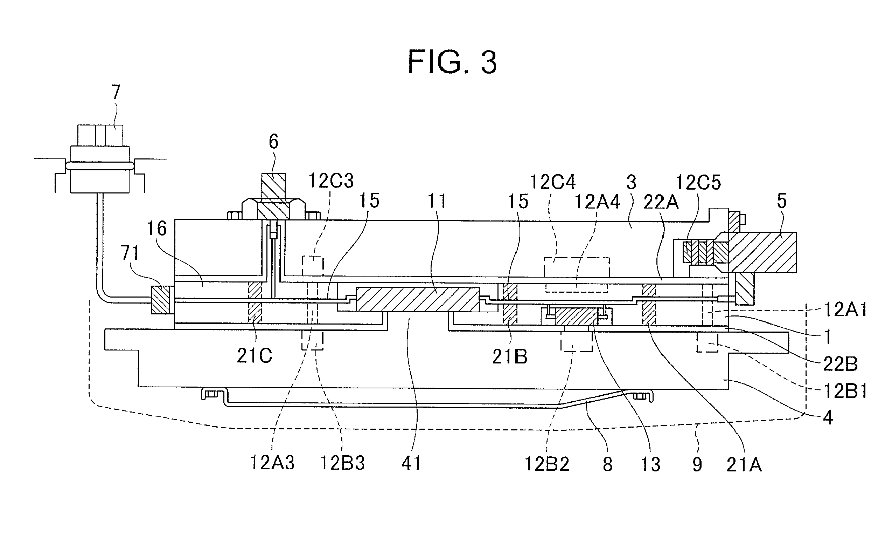

The configuration of the hydraulic control module according to a second embodiment of the present invention will now be described with reference to FIG. 3.

FIG. 3 is an essential part cross-sectional view illustrating the configuration of the hydraulic control module according to the second embodiment of the present invention. Like elements in FIGS. 1 and 3 are designated by the same reference numerals.

In the present embodiment, seal members 22A, 22B are used in place of the separate plates 2A, 2B shown in FIG. 1. The seal members 22A, 22B are made of rubber or other elastic material. Further, the seal members 22A, 22B are integrally secured to both sides of the wiring plate 1.

In the example shown in FIG. 1, the separate plates are separate members. However, when the seal members 22A, 22B are integral with the wiring plate 1 as described above, the number of required parts can be decreased.

The method of connecting the solenoid 5, which is a control target part of the wiring plate 1, is shown in the figure. More specifically, the mounting position of the solenoid 5 is shifted to a lateral surface of the upper control valve 3 so that the solenoid 5 is electrically connected to the electronic control unit 11 through a connection 17 on a wiring member 15 of the wiring plate 1.

As described above, the present embodiment is configured so that the wiring plate is sandwiched between the separated control valves. This makes it possible to set the wiring plate without being restricted by the external shape of a control valve or the shape of a casing around the hydraulic control module. As a result, the hydraulic control module can be downsized.

Further, the employed structure is such that the wiring plate for electrically connecting the electronic control unit to a control target part is sandwiched between the separated control valves. Therefore, the employed structure does not permit electrically conductive foreign matter to enter, for instance, the electronic control unit and control target parts in the wiring plate. This makes it possible to eliminate the necessity of the previously used base member and cover member. In addition, as the wiring plate is sandwiched between the control valves, the employed structure provides increased vibration resistance.

Furthermore, the control valves are provided with a convex heat sink, which is brought into close contact with the electronic control unit. In addition, a sandwich structure is employed so that the heat generated from the electronic control unit dissipates to the heat sink. This ensures that the heat generated from the electronic control unit dissipates to the heat sink with high efficiency.

Moreover, the seal members 22A, 22B are made integral with the wiring plate 1 to reduce the number of required parts.

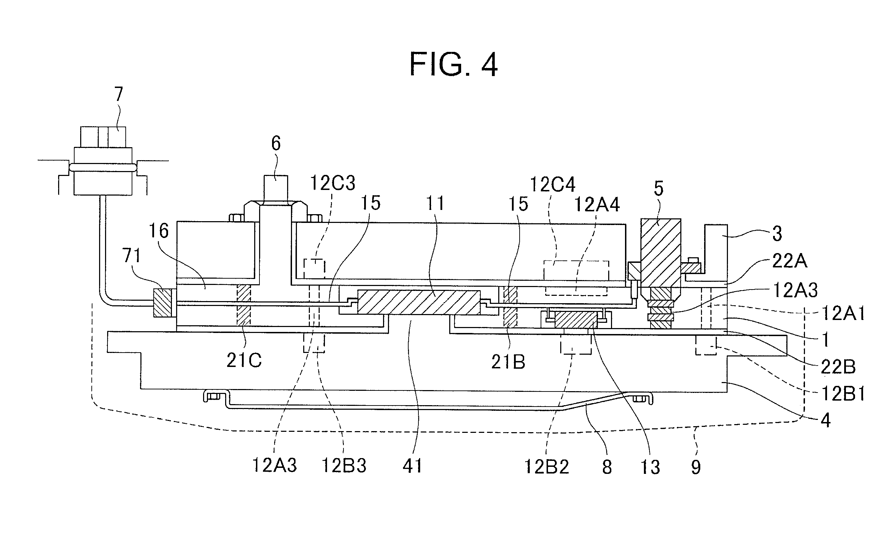

The configuration of the hydraulic control module according to a third embodiment of the present invention will now be described with reference to FIG. 4.

FIG. 4 is an essential part cross-sectional view illustrating the configuration of the hydraulic control module according to the third embodiment of the present invention. Like elements in FIGS. 1, 3, and 4 are designated by the same reference numerals.

In the present embodiment, the sensor 6, which is a control target part, is embedded in the wiring plate 1, which is sandwiched between the control valves 3, 4. The sensor 6 is exposed to view as it is passed through a through-hole in the upper control valve 3.

The solenoid 5, which is also a control target part, is attached to a solenoid mounted on the wiring plate 1. A movable part of the solenoid 5 is inserted into the through-hole 12A3 in the wiring plate 1. The solenoid 5 is electrically connected to the electronic control unit 11 through a connection on a wiring member 15 of the wiring plate 1.

As described above, the present embodiment is configured so that the wiring plate is sandwiched between the separated control valves. The use of such a sandwich structure makes it possible to set the wiring plate without being restricted by the external shape of a control valve or the shape of a casing around the hydraulic control module. As a result, the hydraulic control module can be downsized.

Further, the employed structure is such that the wiring plate for electrically connecting the electronic control unit to a control target part is sandwiched between the separated control valves. Therefore, the employed structure does not permit electrically conductive foreign matter to enter, for instance, the electronic control unit and control target parts in the wiring plate. This makes it possible to eliminate the necessity of the previously used base member and cover member. In addition, as the wiring plate is sandwiched between the control valves, the employed structure provides increased vibration resistance.

Furthermore, the control valves are provided with a convex heat sink, which is brought into close contact with the electronic control unit. In addition, a sandwich structure is employed so that the heat generated from the electronic control unit dissipates to the heat sink. This ensures that the heat generated from the electronic control unit dissipates to the heat sink with high efficiency.

Moreover, the seal members 22A, 22B are made integral with the wiring plate 1 to reduce the number of required parts.

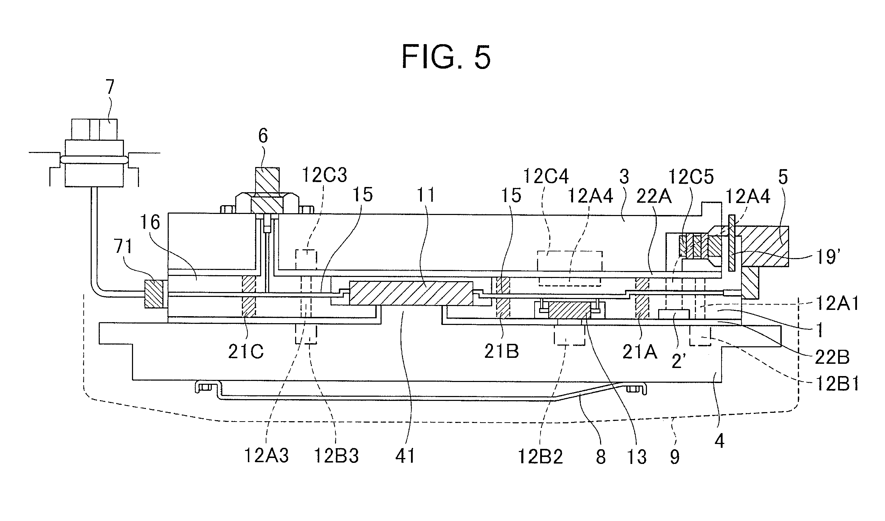

The configuration of the hydraulic control module according to a fourth embodiment of the present invention will now be described with reference to FIG. 5.

FIG. 5 is an essential part cross-sectional view illustrating the configuration of the hydraulic control module according to the fourth embodiment of the present invention. Like elements in FIGS. 1, 3, 4, and 5 are designated by the same reference numerals.

In the present embodiment, the solenoid 5, which is a control target part, is structured so as to provide oil control through a filter 2' embedded in a through-hole 12A4 in the wiring plate 1 and avoid the entry and outflow of foreign matter.

Further, the wiring plate 1 is provided with a holding part 19'. The solenoid 5, which is a control target part, is fastened to the wiring plate 1 by the holding part 19'.

As described above, the present embodiment is configured so that the wiring plate is sandwiched between the separated control valves. The use of such a sandwich structure makes it possible to set the wiring plate without being restricted by the external shape of a control valve or the shape of a casing around the hydraulic control module. As a result, the hydraulic control module can be downsized.

Further, the employed structure is such that the wiring plate for electrically connecting the electronic control unit to a control target part is sandwiched between the separated control valves. Therefore, the employed structure does not permit electrically conductive foreign matter to enter, for instance, the electronic control unit and control target parts in the wiring plate. This makes it possible to eliminate the necessity of the previously used base member and cover member. In addition, as the wiring plate is sandwiched between the control valves, the employed structure provides increased vibration resistance.

Furthermore, the control valves are provided with a convex heat sink, which is brought into close contact with the electronic control unit. In addition, a sandwich structure is employed so that the heat generated from the electronic control unit dissipates to the heat sink. This ensures that the heat generated from the electronic control unit dissipates to the heat sink with high efficiency.

Moreover, the seal members 22A, 22B are made integral with the wiring plate 1 to reduce the number of required parts.

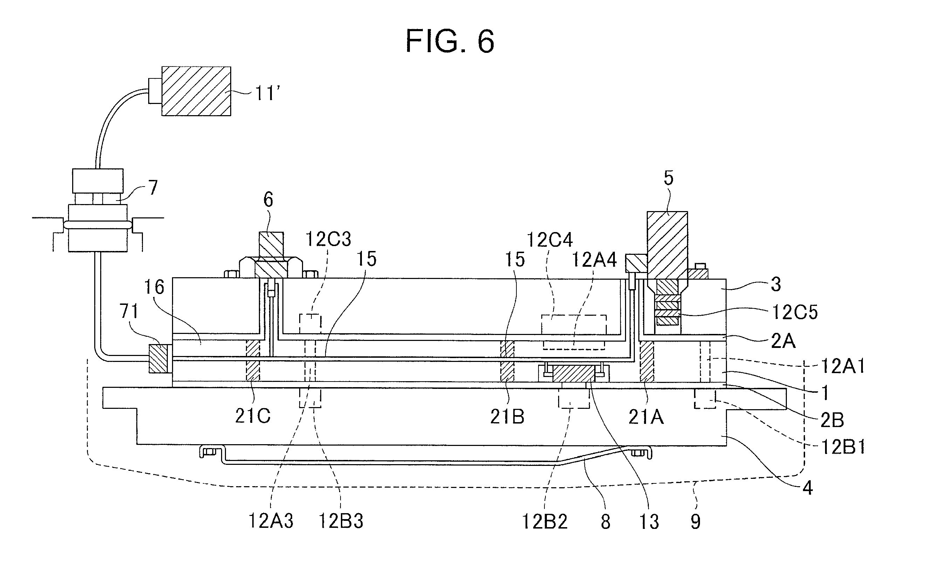

The configuration of the hydraulic control module according to a fifth embodiment of the present invention will now be described with reference to FIG. 6.

FIG. 6 is an essential part cross-sectional view illustrating the configuration of the hydraulic control module according to the fifth embodiment of the present invention. Like elements in FIGS. 1, 3, 4, 5, and 6 are designated by the same reference numerals.

In the example shown in FIG. 1, the electronic control unit 11 is incorporated in the wiring plate 1. In the present embodiment, however, the electronic control unit 11' is installed outside the hydraulic control module and connected to the connector 7.

As described above, the present embodiment is configured so that the wiring plate is sandwiched between the separated control valves. The use of such a sandwich structure makes it possible to set the wiring plate without being restricted by the external shape of a control valve or the shape of a casing around the hydraulic control module. As a result, the hydraulic control module can be downsized.

Further, the employed structure is such that the wiring plate for electrically connecting the electronic control unit to a control target part is sandwiched between the separated control valves. Therefore, the employed structure does not permit electrically conductive foreign matter to enter, for instance, the electronic control unit and control target parts in the wiring plate. This makes it possible to eliminate the necessity of the previously used base member and cover member. In addition, as the wiring plate is sandwiched between the control valves, the employed structure provides increased vibration resistance.

Furthermore, the control valves are provided with a convex heat sink, which is brought into close contact with the electronic control unit. In addition, a sandwich structure is employed so that the heat generated from the electronic control unit dissipates to the heat sink. This ensures that the heat generated from the electronic control unit dissipates to the heat sink with high efficiency.

Moreover, the seal members 22A, 22B are made integral with the wiring plate 1 to reduce the number of required parts.

Features, components and specific details of the structures of the above-described embodiments may be exchanged or combined to form further embodiments optimized for the respective application. As far as those modifications are apparent for an expert skilled in the art they shall be disclosed implicitly by the above description without specifying explicitly every possible combination.

## Claims

1. A hydraulic control module comprising:
a control valve which includes an oil path having a groove portion that provides hydraulic control over a transmission;
an electronic control unit (11) which controls a control target part that is to be controlled by the control valve; and
a wiring plate (1) which includes a wiring member (15) that electrically connects the electronic control unit (11) to the control target part;
wherein the control valve includes a first control valve and a second control valve, the first control valve and the second control valve each including an oil path having a groove portion; and
wherein the wiring plate (1) is sandwiched between the first control valve and the second control valve, and includes an oil path that is in communication with at least one of the groove portion of the first control valve and the groove portion of the second control valve.

2. The hydraulic control module according to claim 1, further comprising:
a separate plate (2A, 2B) which is positioned between the first control valve and the wiring plate (1) and between the second control valve and the wiring plate (1) to make the respective contact surfaces of the separate plate (2A, 2B) oil-tight.

3. The hydraulic control module according to claim 2, wherein the separate plate is a seal which is integral with the surfaces of the wiring plate (1) that are in contact with the first control valve or the second control valve.

4. The hydraulic control module according to at least one of the preceding claims, wherein the wiring plate (1) includes a through-hole (12A1, 12A3) that serves as an oil path; wherein the control target part is a solenoid (5), a movable part of the solenoid (5) being inserted into the through-hole (12A1, 12A3); and wherein the solenoid (5) is mounted on either the first control valve or the second control valve and electrically connected to the electronic control unit (11).

5. The hydraulic control module according to at least one of the preceding claims, further comprising:
a filtering member that is embedded in the wiring plate (1) to prevent foreign matter from flowing into an oil path communicating with the control target part.

6. The hydraulic control module according to at least one of the preceding claims, wherein the wiring plate (1) is integral with a holding part that secures a solenoid (5) as the control target part.

7. The hydraulic control module according to at least one of the preceding claims, further comprising:
a sensor (6) or a switch (13) as the control target part that is embedded in the wiring plate (1) and connected to the electronic control unit (11).

8. The hydraulic control module according to at least one of the preceding claims, further comprising:
a convex heat sink (41) that is integral with either the first control valve or the second control valve and in contact with the electronic control unit (11), which is exposed from a surface of the wiring plate (1).

9. A hydraulic control module comprising:
a control valve which includes an oil path having a groove portion that provides hydraulic control over a transmission; and
a wiring plate (1) which includes a wiring member (15) that is to be electrically connected to a control target part to be controlled by the control valve;
wherein the control valve includes a first control valve and a second control valve, the first control valve and the second control valve each including an oil path having a groove portion; and
wherein the wiring plate (1) is sandwiched between the first control valve and the second control valve, and includes an oil path that is in communication with the at least one of the groove portion of the first control valve and the groove portion of the second control valve.
